Europäisches Patentamt

European Patent Office

Office européen des brevets

(11) Publication number: **0 269 201**
**A1**

## EUROPEAN PATENT APPLICATION

(21) Application number: **87306830.8**

(22) Date of filing: **31.07.87**

(51) Int. Cl.⁴: **B23K 11/36**

(30) Priority: **30.10.86 US 924661**

(43) Date of publication of application:
**01.06.88 Bulletin 88/22**

(84) Designated Contracting States:
**BE DE FR GB IT NL SE**

(71) Applicant: **MCDERMOTT INCORPORATED**
**P.O. Box 60035 1010 Common Street**
**New Orleans Louisiana 70160(US)**

(72) Inventor: **Illacowicz, Jan**
**3716 Coliseum Street**
**New Orleans Louisiana 70115(US)**

(74) Representative: **Purvis, William Michael**
**Cameron et al**
**D. Young & Co. 10 Staple Inn**
**London WC1V 7RD(GB)**

(54) **Flexible conductors for welding.**

(57) A flexible welding conductor particularly for flash butt welding of pipes has a curved stack of flexible copper leaves (18) which have an inside curved surface (18a). Resilient metal shims (20, 21) bear against the inside surface (18a) to urge opposite ends of the stack outwardly. The outer end of the stack is concerned, preferably by welding, to an outer connection plate (14) which carries an outer copper shoe (12). The inner end of the stack is welded to an inner connection plate (16). A fire-resistant ceramic cloth (30) surrounds the stack to protect the metal leaves (18).

FIG. 1

## FLEXIBLE CONDUCTORS FOR WELDING

The invention relates to the welding and has particular, though not exclusive application to the flash butt welding of pipes.

Welding equipment has been proposed for use in the interior of pipes to be welded together. Patent Specification US-A-4,525,616 discloses one example of such welding equipment. Patent Specification US-A-4,817,407 discloses flexible arcuate condition to pass welding current from a power source to a conducting member which is urged against metal to be welded.

The use of multiple flat sheets of conductive material which are squeezed together to form a conductor is disclosed in Patent Specification US-A-3,828,111 and Patent Specification US-A-3,882,265.

According to the invention there is provided a flexible conductor for welding, characterised by a metal shoe; a curved stack of flexible metal leaves having an inside curved surface and an outside curved surface and an inner end and an outer end; an inner connecting plate connected to the inner end of the stack; an outer connecting plate connected between the outer end of the stack and the metal shoe for supporting the metal shoe on the stack; and a plurality of curved shims each connected to at least one of the inner and outer connecting plates and engaged against the inside curved surface of the stack for resiliently urging the outer end of the stack away from the inner end of the stack.

Such a flexible conductor can be particularly useful for flash butt welding together of pipes. The metal shoe is positioned inside the pipe to be welded and is urged outwardly by a flexible conductor assembly formed by the stack of flat metal leaves and the resilient shims. The metal leaves conduct electricity to the shoe and the shims produces a spring action for urging the shoe outwardly against the inner wall of the pipe to be welded.

Advantageously the connector assembly is wrapped in a ceramic cloth fire-resistant sleeve to prevent the entry of dust or other foreign particles between the metal leaves.

The inner connecting plate is preferably welded to the inner ends of the metal leaves and the outer connecting plate is welded to the outer ends of the metal leaves. The outer connecting plate is also welded to the metal shoe. Advantageously the thin metal leaves are welded to the inner and outer connecting plates by electron beam welding.

Electron beam welding is more suitable than soldering or other ways of connecting the metal leaves to the connecting plates.

The flexible conductor can be simple in design, rugged in construction and economical to manufacture.

The invention is diagrammatically illustrated by way of example in the accompanying drawings, in which:-

Fig.1 is a side elevational view, partly in section, showing a flexible conductor according to the invention; and

Fig.2 is a front elevational view of the conductor of Fig.1 with portions cut away for clarity.

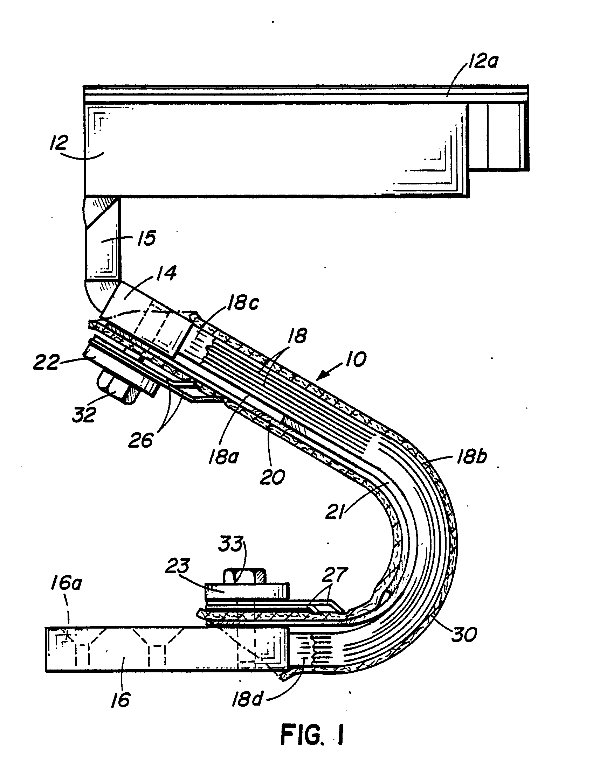

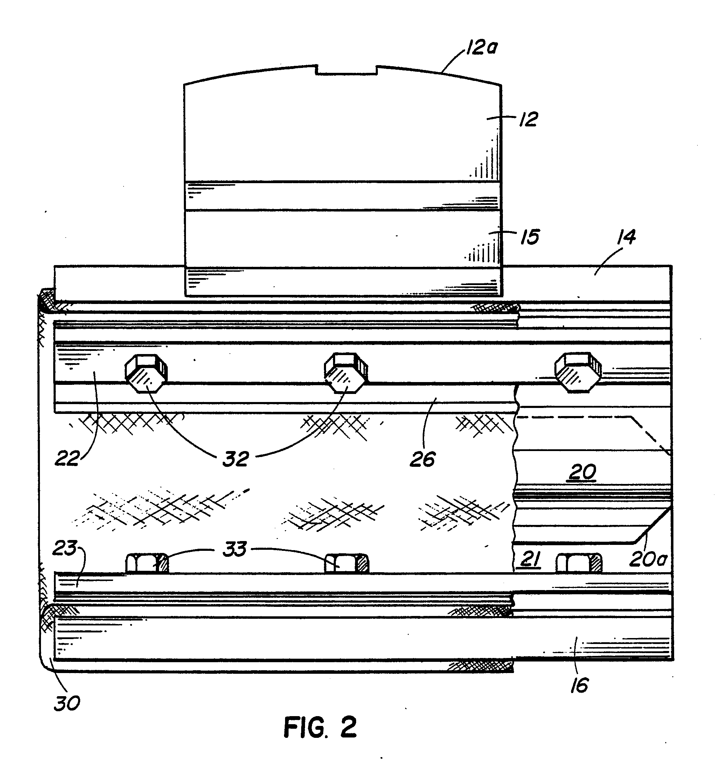

Referring to Fig.1, a flexible conductor shown therein is for use in welding together ends of pipes from the inside of the pipes. Ends of the pipes (not shown) are brought together and a welding current passed between the pipes to cause a flash butt welding together of the pipes. To this end, the flexible conductor comprises a metal shoe 12, which advantageously is made of copper and which is connected to a flexible conductor assembly generally designated 10. As shown in Fig.2, the copper shoe 12 has an upper curved surface 12a which is resiliently engaged against the inside surface of a pipe to be welded.

The flexible conductor assembly 10 comprises a curved stack of flexible flat metal leaves 18 which advantageously are made of copper. In one embodiment there were 160 copper leaves 18 each having a thickness of 0.05 mm. The stack of leaves has an inside curved surface 18a and an outside curved surface 18b.

An outer connecting plate 14 is welded at a weld 18 c to the outer end of the stack of leaves 18 and an inner connecting plate 16 is connected at a weld 18d to the inside end of the stack of leaves 18.

The outer plate 14 is also welded to an intermediate plate 15 which, in turn, is welded to the copper shoe 12.

The plates 14,15 and 16 are all advantageously made of copper.

Preferably the welds 18c and 18d are formed by electron beam welding. This has been found to produce a weld with strong characteristics which are particularly suited for passing high welding currents. The plates 14 and 15 and the shoe 12 are preferably also connected together using electron beam welding.

The welds 18 c and 18d could alternatively be achieved through soldering or diffusion bonding, but these are not as desirable as electron beam welding since soldering is generally unsuited for use in a flexible welding connection and diffusion bonding is not likely to give consistent quality.

Advantageously, a plurality of resilient metal shims, 20 and 21 are engaged against the inside surface 18d of the stack of leaves 18. The shims 20,21 may be of different length. The shim 20 has its outer end connected to the plate 14 by a clamp plate 22 and bolts 32 which extend through holes in the clamp plate 22 and in the shin 20. In similar fashion, the shim 21 is connected to the plate 16 by a clamping plate 23 and bolts 33. Ends of the shims 20 and 21 overlap each other as shown in Fig.1 and resiliently urge the inner and outer ends of the stack 18 away from each other to produce an outer clamping effect for the shoe 12.

The inner connecting plate 16 has a plurality of countersunk and tapped holes 16a which can be used to connect the connecting plate 16 to a mount for supplying welding current to the inner end of the stack of leaves 18.

So as better to press the shims 20 and 21 against the inside curved surface 18a of the stack of leaves 18, one or more leaf springs 26 and 27 are engaged between the clamping plates 22 and 23 and the respective inner and outer connecting plates 14 and 16. The leaf springs 26 and 27 have bent ends which bend toward the inside surface 18a.

To preclude the entry of the other particles between the leaves 18 of the stack of leaves, the entire conductor assembly 10 is wrapped by a sleeve 30 of ceramic fire-resistant cloth. The springs 26 and 27 may bear on the outside of the cloth or the cloth may be wrapped over the springs 26 and 27. The bolts 32 and 33 extend through ends of the sleeve 30 to secure the sleeve in place.

Fig.2 shows part of the sleeve 30 removed to expose the underlying shims 20 and 21. The shims may have doubled corners 20a to prevent the corners from biting into the relatively soft copper leaves 18.

The outer portion of the stack of leaves 18 near the connection 18c is inclined at an angle of about 25° to the horizontal or main plant of the shoe 12 as seen in Fig.1. In the embodiment shown the shoe 12 is spaced from the weld 18c of the stack by the length of the intermediate plate 15 to leave a desired clearance between the shoe 12 and conductor assembly 10 according to the size of the pipe being welded.

## Claims

1. Flexible conductor for welding, characterised by a metal shoe (12); a curved stack of flexible metal leaves (18) having an inside curved surface (18a) and an outside curved surface (18b) and an inner end and an outer end; an inner connecting plate (16) connected to the inner end of the stack; an outer connecting plate (14) connected between the outer end of the stack and the metal shoe (12) for supporting the metal shoe (12) on the stack; and a plurality of curved shims (20,21) each connected to at least one of the inner and outer connecting plates and engaged against the inside curved surface (18 a) of the stack of resiliently urging the outer end of the stack away from the inner end of the stack.

2. A flexible conductor assembly to claim 1, including a fire-resistant sleeve (30) engaged over the curved stack of flexible metal leaves (18) and extending the length of the curved stack.

3. A flexible conductor according to claim 2, including an inner clamping plate (23) connected to the inner connecting plate (16) with an end of the sleeve (30) between the inner clamping (16) and the inner connecting plate (16); and an outer clamping plate (22) connected to the outer connecting plate (14) with an opposite end of the sleeve (30) engaged between the outer clamping (22) and the outer connecting plate (14).

4. A flexible conductor according to claim 1, including at least one leaf (27, 26) spring connected to each of the inner and outer connecting plates (16, 14) with the leaf springs (27, 26) bearing against the shims (21, 20).

5. A flexible conductor according to claim 4, including a fire-resistant cloth sleeve (30) engaged over the curved stack and extending between the inner and outer ends of the curved stack.

6. A flexible conductor according to any one of claims 1 to 5, wherein the inner and outer ends of the curved stack are connected to the inner and outer connecting plates (16, 14) respectively by electron beam welding.

FIG. I

FIG. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | GB-A-2 134 831 (HONDA GIKEN KOGYO K.K.) * claims; figures * | 1,2 | B 23 K 11/36 |
| A | | 3 | |
| Y | DE-A-2 818 492 (FELTEN & GUILLEAUME CARLSWERK AG) * claims 1, 5, 6; figures * | 1,2 | |
| D,A | US-A-3 828 111 (BERTHET) * figures * | 1,3,4 | |
| D,A | US-A-3 882 265 (JOHNSTON et al.) * figures; claims * | 1 | |
| D,A | US-A-4 525 616 (SLAVENS) * claim 1 * | 1 | |

TECHNICAL FIELDS SEARCHED (Int. Cl.4)

B 23 K 9/00
B 23 K 11/00
H 01 B 7/00
H 01 R 4/00
H 02 G 11/00

The present search report has been drawn up for all claims

| Place of search | Date of completion of the search | Examiner |
|---|---|---|
| BERLIN | 25-02-1988 | WUNDERLICH J E |